# FASCICULE DE BREVET EUROPEEN

(11) **EP 1 690 600 B1**
(45) Date de publication et mention de la délivrance du brevet: **05.11.2008**
(21) Numéro de dépôt: 05100960.3
(22) Date de dépôt: 10.02.2005
(51) Int. Cl.: B05B 5/14, B05B 5/16, B05B 1/26, B05B 7/14

(54) **Installation et procédé pour l'application électrostatique en continu d'une peinture en poudre sur un support**
Anlage und Verfahren zum kontinuierlichen, elektrostatischen Beschichten von Substraten mit Pulver
Installation and method for the continuous electrostatic coating of substrates with powder

(43) Date de publication de la demande: 16.08.2006
(73) Titulaire: DMSYS, 8008 Strassen (LU)
(72) Inventeur: Lambert, Paul, 4470 St-Georges (BE)
(74) Mandataire: Machtalère, Georges

(56) Documents cités:
- EP-A- 1 243 340
- FR-A- 2 018 441
- FR-A- 2 049 746
- FR-A- 2 127 171
- FR-A- 2 423 268
- US-A- 3 554 164
- US-A- 3 575 138
- US-A- 4 598 870
- US-A- 6 030 665
- US-A1- 2001 009 700

## Description

La présente invention concerne un procédé pour l'application en continu d'une peinture en poudre sur un support, en général une bande continue et une installation pour la mise en oeuvre du procédé. On fait défiler ce support à travers une enceinte dans laquelle la peinture est déposée sur ce support par voie électrostatique.

Dans cette enceinte se trouve une machine à peindre, qui est du type basse pression et comporte une buse de pulvérisation immergée dans la peinture en poudre.
Les supports ou bandes continues à enduire peuvent être en acier mais la souplesse des principes développés ci-après permet l'enduction d'autres bandes continues réalisées en une autre matière métallique telle que l'aluminium par exemple sans exclure les matières plastiques. Le point essentiel à respecter est que les matières à enduire soient conductrices (ou rendues telles) de l'électricité étant donné que le procédé mis en oeuvre est un procédé électrostatique et nécessite donc la création d'un champ électrique pour appliquer cette peinture en poudre.

Les diverses solutions développées en vue de réaliser l'enduction de substrats de natures diverses au moyen d'une peinture en poudre sont pour la plupart réalisées selon des principes similaires. Les variantes avec buse de pulvérisation utilisent dans tous les cas de l'air comprimé comme fluide pour véhiculer la poudre des réservoirs de stockage ou tampons via les circuits d'alimentation, vers les pistolets ainsi que pour réaliser la pulvérisation proprement dite.

Les procédés récents d'application de peinture en poudre présentent les avantages d'être plus économiques, moins polluants (avantage écologique dû à la suppression de solvants par exemple) et la qualité des revêtements appliqués s'avère meilleure, comparativement aux procédés et installations existants utilisant de la peinture liquide où l'application s'effectue alors au moyen de rouleaux par exemple.

Le brevet EP-A-956909 décrit un procédé et un dispositif pour l'application en continu d'une substance en poudre, notamment de peinture en poudre, sur un substrat conducteur d'électricité sous forme d'une bande continue, défilant sensiblement verticalement suivant la direction de sa longueur à travers une enceinte dans laquelle est introduite la poudre susdite d'une manière sensiblement continue et dans laquelle est créé un champ électrique permettant d'appliquer cette poudre sur au moins une des deux faces du substrat, la poudre étant alimentée à la partie supérieure de l'enceinte de dépôt de manière à permettre à cette poudre de se déplacer essentiellement par gravité le long de la ou des faces du substrat sur laquelle ou lesquelles cette poudre est à appliquer.

Un autre procédé et une autre installation d'application de peinture à partir d'une matière de peinture sèche, sans solvant sont décrits par exemple dans le brevet EP-A-494672 où le procédé pour revêtir en continu une bande de métal (4) avec une composition de revêtement polymère adhérente, consiste à déplacer en continu une bande de métal, choisir un bloc solide d'une composition de peinture essentiellement exempte de solvant comprenant un polymère thermodurcissable, soumettre la bande de métal mobile à un préchauffage à une température de préchauffage supérieure à la température de transition du verre du polymère, appliquer le bloc solide de ladite composition de peinture contre la bande de métal mobile préchauffée tout en exerçant une pression suffisante entre le bloc solide et la bande afin qu'une couche liquide de la composition de peinture soit détachée du bloc et entraînée par la bande de métal en mouvement, lisser ladite couche liquide et poursuivre le chauffage de la couche liquide lissée jusqu'à une température de cuisson en vue de former un revêtement adhérent thermodurcissable sur la bande mobile de métal.

Le brevet US-B-3554164 décrit un dispositif de pulvérisation de poudre comprenant une pluralité de buses alimentées par un distributeur, chaque buse étant disposée par rapport à un support selon un angle à pulvériser et comportant un déflecteur sensiblement perpendiculaire au support.

La publication FR-A-212717, qui est considéré comme décrivant l'art antérieur le plus proche de l'invention, décrit un dispositif pour l'application de poudres, par voie électrostatique, sur des bandes défilant en continu, comprenant des buses de projection reliées à une source haute-tension et à une alimentation de poudre, cette alimentation de poudre consiste en un bac à lit de poudre fluidisée à niveau constant, disposé sensiblement horizontalement à proximité immédiate de la surface à revêtir, des piquages de prélèvement étant pratiqués le long dudit bac au sein du lit de poudre suivant une ligne parallèle au niveau de celui-ci et à des intervalles déterminés en fonction des caractéristiques d'impact des buses, chaque piquage de prélèvement comprenant un injecteur de type Venturi connu en soi, relié à une alimentation en air comprimé et une canalisation reliant cet injecteur à une des buses de projection.

La publication US-A-4 598,870 décrit un dispositif pour appliquer une poudre sur un support plat par voie électrostatique pulvérisant la poudre sur la totalité de la largeur de ce support plat perpendiculairement au plan de ce support.

Les procédés connus dans la technique utilisant une peinture en poudre et une buse de pulvérisation présentent cependant certains désavantages. En effet la longueur des tuyaux ainsi que les diamètres requis pour assurer les débits imposent l'utilisation de pressions d'air suffisamment élevées pour mettre en oeuvre une pulvérisation et une alimentation correctes. Dans ces installations les pressions aux pistolets peuvent varier de 2 à 4kg/cm².

Un autre problème lancinant de ces procédés connus avec peinture en poudre consiste à maintenir dans un espace déterminé les particules de poudre excédentaire, qui ont tendance à se propager autour et alentour des cabines de peinture, avec les inconvénients qui en résultent, pertes de matière, encrassement des machines, et surtout risque d'inhalation par les opérateurs et pollution de l'environnement.

Il est un but de l'invention de résoudre ces problèmes et l'installation de la présente invention permet d'abaisser dans le cas précis, la pression de fonctionnement à des valeurs de l'ordre de 250 à 500 g/cm² pour des résultats de pulvérisation identiques en capacité de recouvrement, soit des pressions près de 10 fois moindres.

De même, l'installation selon l'invention permet de maintenir un minimum de peinture en poudre en excès dans un espace confiné de sorte que les inconvénients résultant mentionnés ci-dessus sont fortement atténués voire supprimés. Cette poudre de peinture en excès est aspirée via un cyclone et remise en circulation dans le circuit d'alimentation ou est éliminée vers l'extérieur en passant par des filtres qui retiennent les particules de poudre. Une aspiration est donc encore nécessaire, mais vu le faible excès (faible quantité), il serait même possible de supprimer la remise en circulation dans le circuit d'alimentation et se contenter de l'élimination vers l'extérieur au travers de filtres.

En effet, les cabines dans les lignes continues ou discontinues d'application de peinture, sont alimentées selon la productivité par 5 à 25 pistolets lesquels créent une surpression importante difficile à maîtriser. A raison de 2 kg/cm² de pression minimum par pistolet cela représente une quantité d'air importante à aspirer pour réaliser la mise en dépression des cabines. Les puissances requises ne sont pas négligeables. Elles peuvent s'élever jusqu'à 50 KW à l'extraction.
Le procédé en continu d'application de peinture en poudre sur un support selon l'invention est défini dans la partie caractérisante de la revendication 1.

L'installation pour la mise en oeuvre du procédé selon l'invention est définie dans la partie caractérisante de la revendication 8. Divers modes de réalisation sont définis dans les sous-revendications.

Pour que l'invention puisse être mieux comprise référence est faite aux dessins annexés d'un mode de réalisation non limitatif d'une installation d'application de peinture en poudre.
La fig. I est une représentation schématique en élévation d'un mode de réalisation d'installation selon l'invention.
La fig. II est une représentation schématique en élévation de la machine à peindre utilisée dans l'installation de la fig. I.
La fig. IIa représente un autre mode de réalisation de la machine à peindre de la fig. II.
La fig. III montre des représentations schématiques des embouts gicleurs employés dans les machines à peindre des figs. II et IIa.
La fig. IV est une vue schématique du pulvérisateur réglable employé dans la machine à peindre de l'invention.

Il convient de remarquer que dans toutes ces figs. les mêmes éléments sont désignés par les mêmes signes de références.

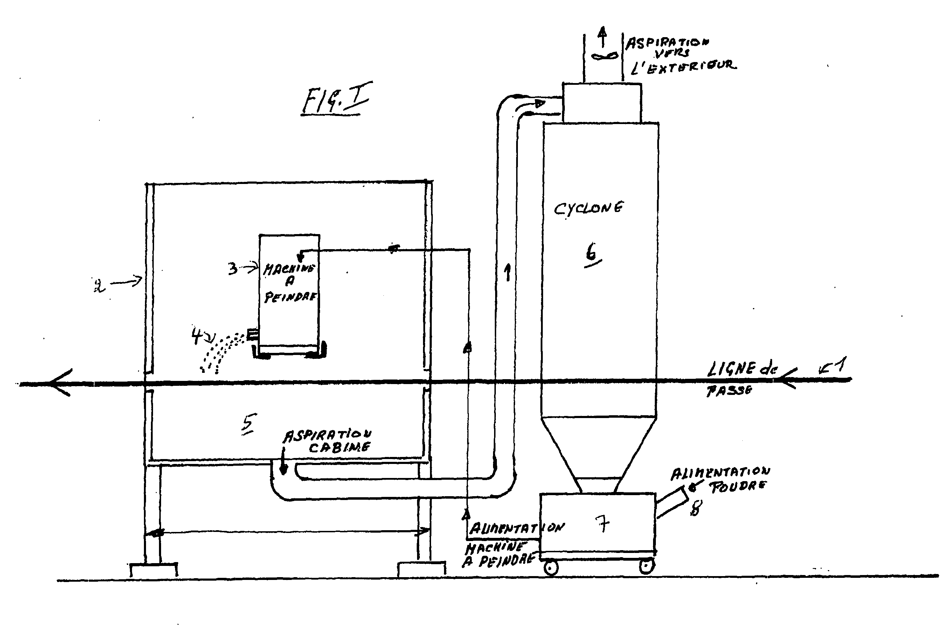

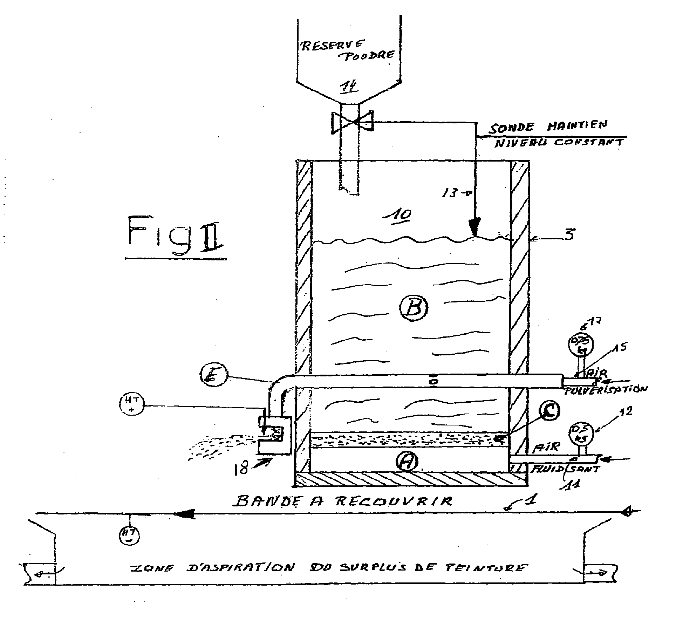

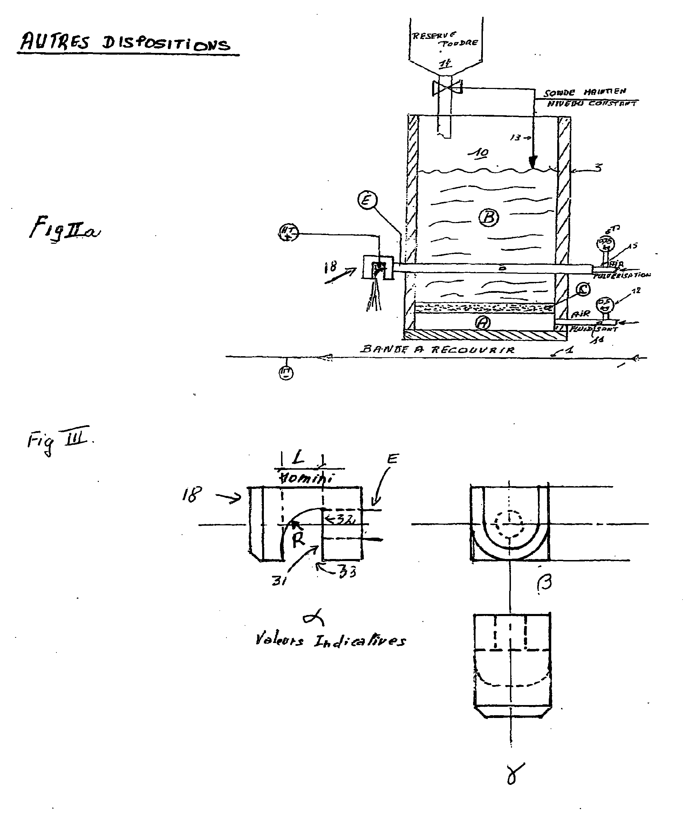

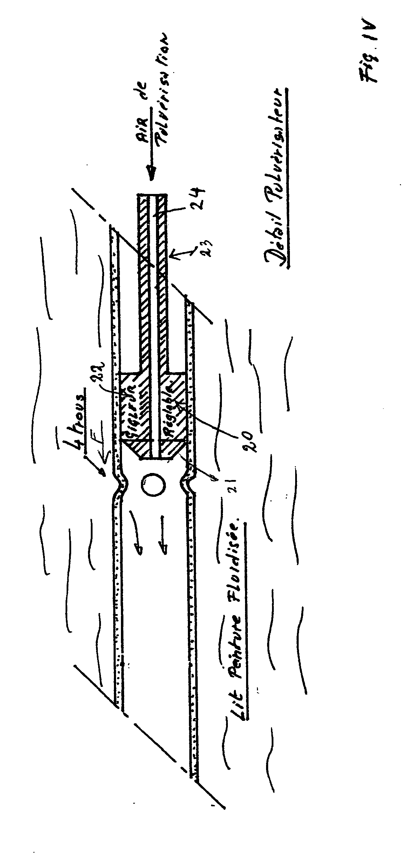

L'installation selon l'invention d'application électrostatique en continu d'une peinture en poudre sur un substrat, par exemple sous forme d'une bande continue 1, en acier, en aluminium, autre matière métallique sans exclure les matières plastiques rendues conductrices de l'électricité, est montrée dans la figure I. Cette bande continue 1 défile dans le sens des flèches au travers d'une enceinte 2 aux parois réalisées en matière de préférence isolante.

Dans l'enceinte 2, positionnée et montée au-dessus de la ligne de passage de la bande continue 1, se trouve une machine à peindre 3, montrée plus en détails dans la fig. II et la fig. IIa (autre mode de réalisation) et décrite davantage ci-après. Cette machine délivre de manière continue, homogène et selon un débit régulier la peinture en poudre 4 sur toute la largeur de la bande continue. L'excédent de poudre est aspiré dans une cabine d'aspiration 5 disposée en-dessous de la ligne de passe de la bande continue. Cette cabine 5 est en dépression par rapport à la pression dans la machine à peindre, sous l'effet du cyclone 6 lequel aspire ainsi le surplus de poudre 4 qui est retourné via le circuit d'alimentation dans la machine à peindre ou est éliminé vers l'extérieur en passant au préalable par des filtres qui retiennent les particules de poudre.

L'alimentation en peinture en poudre se fait via l'orifice 8 d'un réservoir se trouvant en-dessous et la poudre est amenée dans la réserve de poudre 14 positionnée au-dessus de la machine à peindre.

La fig. II montre en détails la machine à peindre 3 de la présente invention. Elle se compose d'un caisson 10 ayant la forme d'un bloc parallélépipédique de section transversale rectangulaire. La largeur de la base de ce caisson est adaptée de façon à recouvrir la largeur de la bande continue à enduire. Ce caisson 10, comme indiqué ci-dessus, est monté au-dessus de la ligne de passe de la bande continue 1. Les parois de ce caisson 10 sont réalisées de préférence en matériaux isolants électriques ou sont recouvertes d'un tel matériau afin d'assumer une isolation électrique par rapport à la masse. Il va de soi que l'invention n'est pas limitée à la forme de ce caisson et tout autre forme convient également.

Comme on peut le voir dans la fig. II, ce caisson 10 est constitué de deux zones ou compartiments A et B bien distincts, de dimensions et volumes très différents séparés par une membrane C diffusante, perméable à l'air.

Le compartiment A est conçu comme une boîte diffusante dont le dessus est limité par la membrane ou surface perméable C ce qui permet le passage vers le haut de l'air. Cet air a un rôle fluidisant et transforme la peinture en poudre présente dans le compartiment B en un lit fluidisé de cette poudre. L'air est insufflé dans le compartiment A via un conduit 11 et sa pression est réglée au moyen d'un détendeur schématiquement représenté en 12. Ce détendeur 12 maintient la pression d'air dans le compartiment A à des valeurs adaptées pour la création d'un lit fluidisé. Ces pressions sont plus basses que celles généralement rencontrées dans l'état de la technique et sont de l'ordre de 250 à 600 gr/cm² de préférence de 500 g/cm². Cette valeur est donnée à titre indicatif et en aucun cas ne peut être utilisée pour limiter la portée de l'invention.

Le compartiment B contenant la poudre de peinture est d'un volume beaucoup plus important que le compartiment A. Le volume de cette poudre est transformée en un lit fluidisé de poudre par l'arrivée de l'air sous pression provenant du compartiment A et le rapport entre les volumes des compartiments A et B dépend de la fréquence envisagée des apports de poudre de peinture.

Un détecteur de niveau ou sonde 13 est prévu dans le compartiment B. Ce détecteur maintient le niveau constant et lorsque, en fonctionnement, le niveau de poudre baisse ce détecteur provoque l'ouverture de la réserve de poudre 14 et le compartiment B est réalimenté en peinture. On comprendra aisément que le volume et par conséquent le niveau de peinture du lit fluidisé est fonction de la quantité et de la pression de l'air insufflé provenant du compartiment A et donc de la pression maintenue constante dans ce compartiment. Lorsque de l'air est insufflé dans le compartiment B le volume apparent de la peinture à l'état fluidisé augmente d'une hauteur de l'ordre de 20 à 50% par rapport au niveau au repos c'est-à-dire à l'état non-fluidisé ou figé.

La peinture est projetée sur le support au moyen d'une buse de pulvérisation immergée E qui traverse le compartiment B et le lit fluidisé dans lequel elle est immergée, de part en part, au-dessus de la membrane perméable C et sensiblement parallèlement à celle-ci. Elle est alimentée à une extrémité par de l'air de pulvérisation via un conduit 15 dont la pression est également réglée au moyen d'un détendeur (1 régulateur par buse) schématiquement représenté en 17. Cette pression est adaptée au dépôt souhaité de couleur et est de préférence maintenue entre 100 à 500 g/cm² par exemple 250 g/cm². Cette pression en fonctionnement continu est indépendante de la pression dans A.

L'autre extrémité de la buse de pulvérisation immergée (d'extrémité ronde mais dont la forme peut varier sous réserve du respect du maintien constant de la section) comporte un embout-gicleur dont la forme est adaptée pour réaliser un jet plat, d'angle de dispersion pouvant varier entre 30° et 180°. Selon un mode de réalisation préféré cet angle est de 180°, mais peut évidemment varier dans les limites de 30° à 180° selon les exigences de l'utilisation.

Dans sa partie immergée dans le lit fluidisé, la buse de pulvérisation est percée sur son pourtour circonférentiel d'un nombre variable de trous calibrés permettant le transfert de la peinture depuis le compartiment B via ces ouvertures dans le conduit de la buse E sur le support à enduire. Ce transfert se fait par effet venturi bien connu sous l'effet de l'air de pulvérisation sous pression passant au travers de la buse à hauteur de ces trous calibrés. Le réglage de la pression permet de régler le débit. Le débit de poudre peut aussi être réglé au moyen d'un pulvérisateur réglable (20) (à décrire ci-après) positionné dans la buse de pulvérisation au niveau des trous calibrés comme il est montré dans la fig. IV.

La combinaison de la pression d'air de pulvérisation dans la buse de pulvérisation E immergée, du calibrage et du nombre de trous sur cette buse de pulvérisation et de l'embout-gicleur projetant le jet de peinture sur le substrat, permet de réaliser avec un nombre approprié de buses, des dépôts de 50 à 300 g/m² (intervalle donné à titre indicatif et qui n'est en aucun cas limitatif).

Etant donné le jet plat horizontal sortant de l'embout-gicleur 18 on obtient un recouvrement de 18 cm avec un angle de dispersion de 50° et ceci donne une largeur effective de revêtement de 12 cm par embout-gicleur. Dans le cas des bandes continues en acier, par exemple, la largeur habituelle des bandes est de l'ordre de 1250 mm. Un calcul simple permet donc de conclure qu'il faut environ 10 buses pour couvrir cette largeur de 1250 mm. Ce nombre plutôt restreint est à comparer avec les 24-25 buses qui sont nécessaires pour le recouvrement avec des procédés en solution à haute pression.

L'embout-gicleur 18 donnant un jet plat est positionnée de façon à propulser un jet plat de peinture soit parallèlement soit perpendiculairement à la direction de la surface à peindre, et à une distance de 5 à 10 cm au-dessus de celle-ci, cela permet d'éviter le rebond de l'air de diffusion sur l'objet à peindre, et on peut aussi raisonnablement espérer que cette disposition est également favorable à l'électrostatisation, à la dispersion de la peinture et partant de la qualité du dépôt. La fig. II montre un mode de réalisation avec embout-gicleur émettant un jet plat horizontal parallèle au substrat 1 et la fig. IIa montre un mode de réalisation avec jet plat vertical perpendiculaire à ce substrat 1.

La faible pression de pulvérisation dans la buse immergée ainsi que le jet dirigé horizontalement sortant de l'embout-gicleur, le nombre réduit de ces embouts-gicleurs, ainsi que la faible distance entre embouts-gicleurs et le substrat (empêchant le rebond) diminueront l'excès de peinture tombant sur le substrat. Ces caractéristiques combinées diminuant fortement le surplus de peinture permettent même d'éliminer ce surplus simplement via des filtres vers le milieu extérieur par aspiration au cyclone 6 comme on l'a vu plus haut. Il est cependant bien entendu que dans le mode de réalisation préféré, on se servira de préférence d'une combinaison de ces propriétés c.-à-d. évacuation via cyclone 6 et recyclage de retour dans le circuit d'alimentation et faible surplus pouvant être éliminé en passant au préalable à travers des filtres vers l'extérieur.

Le principe d'enduction électrostatique des supports, permettant l'adhérence et la cohésion du revêtement avant cuisson est bien connu en soi et ne nécessite pas d'explications détaillées ici. Il est mis en oeuvre en utilisant un générateur haute tension à THT (100 kV) qui est raccordé d'un part à une électrode d'ionisation incluse dans l'embout-gicleur 18 et d'autre part au support à revêtir.

La forme plate du jet de peinture ainsi que l'angle de dispersion souhaité de la peinture sortant de l'embout-gicleur 18 dépendent essentiellement de paramètres liés à cet embout-gicleur, notamment sa forme et ses dimensions.
La fig. III, est une représentation de profil de l'embout-glicleur 18, tel qu'on peut le voir dans les figs. II et IIa. Cet embout forme la tête de la buse de pulvérisation E. Il est creux à l'intérieur et comporte une paroi 31 pourvue d'une ouverture 32 par laquelle la peinture en poudre est introduite dans l'embout-gicleur. A l'opposé de la paroi 31 se trouve une paroi arrondie de rayon de courbure R déterminé, la courbure étant choisie en fonction de l'angle de dispersion souhaitée. La valeur du rayon de courbure R se situe généralement entre 1 mm à 15 mm. Plus ce rayon est petit et plus l'angle de dispersion est important.
Par exemple, avec un rayon de courbure de 1 mm on obtient un jet plat avec un angle de dispersion de près de 180°; un rayon de 5 mm donne un angle de dispersion d'environ 90°, alors qu'un rayon de 10 mm donne un angle de dispersion de 50°. Après avoir heurté la paroi courbe la peinture en poudre sort par l'ouverture 33 de l'embout-gicleur 18 en un jet plat avec l'angle de dispersion souhaité.

La fig. IV montre en coupe, un détail de la buse de pulvérisation E immergée, au niveau des trous calibrés par lesquels pénètrent les particules de poudre aspirées à l'intérieur par l'effet Venturi. A l'intérieur de cette buse de pulvérisation, au niveau des trous se trouve un gicleur réglable qui aide à régler le débit de la poudre de peinture pénétrant par les trous.

Ce gicleur 20 comporte une tête dont le sommet 21 a une forme tronconique qui se prolonge par une partie cylindrique 22 dont le diamètre extérieur est étroitement ajusté au diamètre intérieur de la buse de façon à permettre à cette tête 20 de coulisser dans la buse de pulvérisation E, sans qu'il y ait de jeu. La partie cylindrique se prolonge par un tube cylindrique de diamètre plus petit. L'ensemble partie tronconique 21, partie cylindrique 22 et partie tubulaire 23 du gicleur réglable 20 a en fait la forme d'un piston comme on peut le voir dans la fig. III et est mobile dans la buse au moyen d'un dispositif de réglage micrométrique quelconque (non montré)

Ce gicleur réglable 20 comporte un alésage central 24 par lequel passe l'air de pulvérisation. Lorsqu'on désire régler ou ralentir le débit de la poudre pénétrant dans la buse, on fait avancer la tête vers les trous au moyen de ce système de réglage quelconque. Lorsque la partie tronconique 21 vient au voisinage immédiat de ces trous, le diamètre, plus petit de cette partie étant écarté des ouvertures permet encore l'entrée des particules tout en ralentissant déjà leur débit. Ce débit deviendra de plus en plus lent au fur et à mesure que l'on progresse dans le sens de la flèche F jusqu'au moment où la partie cylindrique 22, dont le diamètre extérieur est sensiblement identique au diamètre intérieur de la buse de pulvérisation E, vient au contact des trous calibrés et dès lors le débit est arrêté.

Il va de soi que la pression de l'air dans la buse de pulvérisation influence également le débit d'entrée des particules de peinture selon que cette pression est plus ou moins élevée. Il est donc possible de jouer à la fois sur cette pression et sur le réglage du gicleur réglable 20 pour fixer le débit des particules entrant dans la buse de pulvérisation et par conséquent le débit sortant de l'embout-gicleur sortant en un jet plat horizontal.

Un orifice calibré d'air de nettoyage (non représenté fig III) est prévu dans l'embout gicleur afin de nettoyer la face diffusante avant le démarrage du pulvérisateur.

Après la fixation de la poudre sur le support, tel qu'une bande continue, celui-ci peut être chauffé de manière à soumettre cette poudre à une fusion au moins partielle pour former un revêtement sensiblement uniforme et homogène. L'installation à basse pression et le procédé décrits ici n'ont aucune incidence sur le type de cuisson utilisé. On peut procéder par convection IR, UV ou NIR (infra-rouge proche) dans des temps variant entre 5 secondes à 5 minutes. Etant donné que ce sont des techniques connues en soi, il est inutile de détailler ces procédés de cuisson ici.

Tout type de peintures peut-être utilisé, pour autant qu'elles puissent être conditionnées avec des valeurs granulométriques compatibles avec la réalisation d'un lit fluidisé, soit une dimension moyenne de 50µ. L'intervalle préféré de granulométrie se situe entre 10 et 150 µm.

Comme exemples de peinture on peut citer les polymères tels que les polyesters, les époxy thermoplastiques, fluorés, polyuréthanes adaptés ou non aux cuissons rapides sans être limités à ceux-ci.

Lorsqu'on désire changer la peinture ou la couleur de celle-ci dans les installations de grande taille connues à haute pression, cette opération devient onéreuse du fait de la matière perdue, de l'arrêt prolongé de l'installation pour le nettoyage des parois etc.

Le faible encombrement de la machine à peindre selon l'invention (100 dm³) permet d'envisager la réalisation de cassettes interchangeables, le nettoyage se faisant en-dehors de l'installation réduisant ainsi le temps d'arrêt et permettant même la récupération de la poudre de peinture dans la machine à peindre.

D'une manière générale on peut remarquer que l'installation et procédé selon l'invention permettent:
I) Régularité du flux de peinture
   Celle-ci est réalisée par des dispositifs statiques, et moyennant contrôle de grandeurs simples de garantir une arrivée constante de produit sur l'objet à revêtir.
   Ces grandeurs sont, d'une part les pressions dans la boîte diffusante créant le lit fluidisé, et la pression dans le pistolet de pulvérisation et d'autre part la hauteur de lit fluidisé lorsqu'il est activé.
II) Réalisation du jet de pulvérisation
   Moyennant une adaptation correcte des diamètres des divers conduits, et le respect de certaines règles propres aux poudres, un embout de pulvérisation adapté à la réalisation particulière de cette machine c'est-à-dire un jet plat vertical ou horizontal d'un angle de 30° à 180° a été étudié.
III) Ionisation du flux
   Le corps immergé de la buse de pulvérisation étant métallique, il suffit (moyennant des précautions d'isolement évidentes) de le porter au potentiel voulu pour réaliser l'ionisation de la peinture et partant permettre la peinture électrostatique de l'objet, l'embout extérieur étant en matière plastique approprié. Cette disposition a également un effet favorable sur le comportement du lit fluidisé.
VI) Réglage du débit
   A l'intérieur de la buse de pulvérisation, se trouve un dispositif de réglage permettant un affinement de la quantité pulvérisation. Ce dispositif peut être asservi à la marche d'une installation, permettant le fonctionnement de la machine à peindre durant les phases d'accélérations ou de décélérations et donc amener plus de souplesse aux installations.

Résumé des caractéristiques et avantages de l'invention.
1) Faibles pressions de pulvérisation
2) Faible volume de peinture en circulation
3) Faible taux de recyclage
4) Jets plats à faible pression évitant le rebond de l'air de diffusion
5) La distance sortie de buse de pulvérisation et gicleur peut-être de plusieurs mètres permettant l'emploi de la machine dans les installations conventionnelles
6) Temps de changement de peinture réduits du fait de l'interchangeabilité de la machine et du faible degré d'encrassement des cabines.
7) Grande surface de contact de la peinture et des électrodes d'électrisation favorisant la dispersion et l'électrostaticité de la dispersion.
8) Gamme de vitesse de 10 à 50 m/min (non limitatif)
9) Puissance d'extraction réduite et faible

Les buts de 'invention sont atteints grâce à l'originalité de cette machine à peindre basse pression revendiquée et sa différence par rapport aux systèmes conventionnels utilisant des pistolets. Cette originalité résulte des trois différences majeures suivantes:
1. la buse de pulvérisation, qui réalise la veine de peinture prête à être projetée se trouve localisée dans un milieu propice à sa formation (lit fluidisé), et dès lors la pression d'entrée n'est pas cumulée avec celles des opérations de transfert connues.
2. l'embout-gicleur réalise un jet plat d'angle de jusqu'à 180°, de par sa conception originale, (angle adaptable selon le rayon de déflexion choisi) il ne produit pas de restriction de section du flux de peinture ne nécessitant donc pas d'accroissement de pression amont pour la vaincre.
3. L'embout n'amenant pas de rétrécissement de section de passage réduit très fortement les possibilités d'encrassement et partant la nécessité impérieuse d'un air de nettoyage, prévu sur les pistolets conventionnels.

L'invention a été décrite au moyens de modes de réalisation préférés et il va de soi que ceux-ci n'ont qu'un but illustratif et que les limites de l'invention ne doivent être considérées que dans le cadre des revendications ci-jointes.

## Revendications

1. Procédé pour l'application électrostatique en continu d'une peinture en poudre (4) sur un support (1), de préférence sous forme d'une bande continue comprenant les étapes de:
faire défiler sensiblement horizontalement le support (1) dans le sens de sa longueur au travers d'une enceinte (2) de dépôt de la peinture en poudre,
monter une machine à peindre (3) au-dessus de la ligne de passe du support (1) à une distance prédéterminée de celle-ci et à l'intérieur de l'enceinte (2), cette machine à peindre comportant deux compartiments (A) et (B), séparés par une membrane diffusante (C) perméable à l'air, le compartiment (B) contenant un volume de peinture en poudre et le compartiment A recevant de l'air fluidisant sous pression pour transformer ce volume de poudre en un lit fluidisé de poudre dans le compartiment (B);
introduire la peinture en poudre dans la machine à peindre (3) jusqu'à un niveau prédéterminé, et
créer un champ électrique à l'aide d'électrodes entre une buse de pulvérisation (E) de la peinture en poudre et le support,
pulvériser la peinture en poudre depuis la buse de pulvérisation (E) sur le support (1) de telle manière que le jet pulvérisé est projeté selon un jet plat horizontal ou vertical de 30 à 180° maximum, la buse de pulvérisation (E) étant immergée dans la peinture en poudre et traversant de part en part le compartiment (B) et le lit fluidisé dans lequel elle est immergée, au-dessus de la membrane perméable C et sensiblement parallèlement à celle-ci, cette buse étant alimentée à une extrémité par de l'air de pulvérisation et étant reliée à l'autre extrémité par un embout-gicleur (18), ledit l'embout-gicleur (18) étant creux à l'intérieur et comportant une paroi (31) interne pourvue d'une ouverture (32) par laquelle la peinture en poudre est introduite dans l'embout-gicleur (18), une paroi arrondie de rayon de courbure (R) de dimension comprise entre 1 et 15 mm se trouvant à l'opposé de la paroi (31), la courbure étant choisie en fonction de l'angle de dispersion souhaité du jet plat de peinture en poudre,
faire passer dans la buse de pulvérisation (E) immergée dans la peinture en poudre fluidisée de l'air à une pression comprise entre 100 et 500 g/cm².

2. Procédé selon la revendication 1 où on utilise une machine à peindre (3) dont les parois sont réalisées en matière isolante électrique ou sont rendues isolantes.

3. Procédé selon la revendication 2 où on provoque la fluidisation de la peinture en poudre en utilisant une machine à peindre à deux compartiments, un compartiment (B) contenant la peinture poudre sous forme fluidisée, et un compartiment (A) situé en-dessus du compartiment (B) par lequel on fait passer l'air fluidisant, les deux compartiments A et (B) étant séparés par une membrane diffusante (C) perméable à l'air la pression de l'air de fluidisation dans le compartiment (A) étant maintenue à une pression adaptée à la quantité de peinture à fluidiser, comprise entre 300 gr/cm² et 1 kg/cm².

4. Procédé selon la revendication 1 au cours duquel le niveau de poudre dans le compartiment (B) est maintenu constant au moyen d'une sonde de maintien de niveau reliée au réservoir en poudre et à la surface du volume de poudre se trouvant dans le compartiment (B).

5. Procédé selon l'une quelconque des revendications précédentes où après la fixation de la peinture en poudre sur le support (1) celui-ci est chauffé de manière à soumettre cette poudre à une fusion au moins partielle permettant de former un revêtement sensiblement uniforme sur le support.

6. Procédé selon la revendication 5 où la cuisson du support recouvert de poudre est soumise à une cuisson par infrarouge, UV ou NIR (infrarouge proche).

7. Installation pour la mise en oeuvre du procédé selon la revendication 1 pour l'application en continu d'une substance en poudre (4) sur un support (1) conducteur d'électricité ou rendu tel de préférence sous forme d'une bande continue, comprenant:
une enceinte (2) pour le dépôt de la peinture sur ce support (1) lequel est en mesure de défiler à la partie inférieure de cette enceinte (2),
une machine à peindre (3) positionnée au-dessus de la ligne de passe du support (1) dans laquelle on introduit la peinture poudre, et
des moyens pour créer dans cette enceinte (2) un champ électrique permettant d'appliquer cette poudre (5) sur le support par voie électrostatique,
une cabine d'aspiration (5) à la partie inférieure de l'enceinte (2) permettant d'aspirer l'excédent de peinture en poudre,
un cyclone (6) relié à la cabine d'aspiration (5) pour aspirer cette poudre en excès et comportant à sa partie supérieure un dispositif d'élimination de la poudre vers l'extérieur via des filtres et comportant à sa partie inférieure une ouverture reliée au système d'alimentation de la machine à peindre pour recycler l'excédent de peinture en poudre dans le circuit, la machine à peindre comportant deux compartiments (A) et (B), séparés par une membrane diffusante C perméable à l'air, le compartiment (B) contenant un volume de peinture en poudre et le compartiment (A) recevant de l'air fluidisant sous pression pour transformer ce volume de poudre en un lit fluidisé de poudre dans le compartiment (B),
une buse de pulvérisation E immergée dans la peinture en poudre traversant de part en part le compartiment B et le lit fluidisé dans lequel elle est immergée, au-dessus de la membrane perméable (C) et sensiblement parallèlement à celle-ci, **caractérisé en ce que** cette buse est alimentée à une extrémité par de l'air de pulvérisation à une pression de 100 à 500g/cm² pendant l'utilisation et est reliée à l'autre extrémité par un embout-gicleur (18), et **en ce que** cet embout gicleur (18) est creux à l'intérieur et comporte une paroi (31) interne pourvue d'une ouverture (32) par laquelle la peinture en poudre est introduite dans l'embout-gicleur, et à l'opposé de la paroi (31) se trouve une paroi arrondie de rayon de courbure (R) compris entre 1 mm et 15 mm, la courbure étant choisie en fonction de l'angle de dispersion souhaité du jet plat de peinture en poudre.

8. Installation selon la revendication 7, où les parois de la machine à peindre (3) sont en matière isolante électrique.

9. Installation selon la revendication 7, où la buse de pulvérisation E comprend dans sa partie immergée dans la poudre de peinture des trous calibrés disposés circonférentiellement par lesquels la peinture en poudre est aspirée par effet Venturi.

10. Installation selon la revendication 9, où l'air de pulvérisation passant au travers de la buse de pulvérisation est maintenu à une pression comprise entre 0,2 et 0,6 Kg/cm².

11. Installation selon la revendication 7, où la pression d'air passant dans le compartiment A est maintenue à une pression adaptée à la quantité de peinture à fluidiser, de préférence entre 300 g/cm² et 1kg/cm².

12. Installation selon la revendication 7, où la machine à peindre (3) comporte une sonde de maintien du niveau de la poudre dans le compartiment (B), reliée au réservoir de poudre 14 et à la surface du volume de poudre dans le compartiment (B).

13. Installation selon la revendication 9, où l'effet Venturi aspirant la poudre par les orifices calibrés est provoqué par l'air de pulvérisation passant au travers de la buse et par un dispositif de réglage situé à l'intérieur de la buse au niveau des trous d'aspiration de la poudre.

14. Installation selon la revendication 13, où ce dispositif de réglage est un pulvérisateur réglable (20) comportant une tête dont le sommet (21) a une forme tronconique qui se prolonge par une partie cylindrique (22) de diamètre extérieur ajusté au diamètre intérieur de la buse d'aspiration, cette partie cylindrique (22) étant raccordée à son extrémité à une partie tubulaire (23) de diamètre plus petit de façon que l'ensemble partie tronconique, partie cylindrique et partie tubulaire forme un piston, et comportant un alésage central (24) par lequel passe l'air de pulvérisation.

15. Installation selon la revendication 15, où le gicleur réglable (20) permet de régler le débit de peinture en poudre passant par les orifices calibrés de la buse de pulvérisation.

## Claims

1. A method for the continuous electrostatic application of a powder paint (4) on a substrate (1), preferably in the form of a continuous band, comprising the stages of:
passing the substrate (1) substantially horizontally in the direction of its length through an enclosure (2) for the depositing of the powder paint,
mounting a painting machine (3) above the passage line of the substrate (1) at a predetermined distance from the latter and inside the enclosure (2), this painting machine comprising two compartments (A) and (B), separated by a diffusing membrane (C) which is permeable to air, the compartment (B) containing a volume of powder paint and the compartment (A) receiving fluidizing air under pressure to transform this volume of powder into a fluidized bed of powder in the compartment (B),
introducing the powder paint in the painting machine (3) up to a predetermined level, and
creating an electrical field by means of electrodes between a spray nozzle (E) of the powder paint and the substrate,
spraying the powder paint from the spray nozzle (E)on the substrate (1) such that the sprayed jet is projected according to a horizontal or vertical flat jet of 30 to 180° maximum, the spray nozzle (E) being immersed in the powder paint and passing through the compartment (B) and the fluidized bed in which it is immersed, above the permeable membrane (C) and substantially parallel thereto, this nozzle being supplied at one end by spray air and being connected at the other end by a jet end (18), the said jet end (18) being hollow in the interior and comprising an internal wall (31) provided with an opening (32) through which the powder paint is introduced into the jet end (18), a rounded wall with a radius of curvature (R) of a dimension comprised between 1 and 15 mm being situated opposite the wall (31), the curvature being selected as a function of the desired dispersion angle of the flat jet of powder paint,
passing air at a pressure comprised between 100 and 500 g/cm² in the spray nozzle (E) immersed in the fluidized powder paint.

2. The method according to Claim 1 in which a painting machine (3) is used, the walls of which are made of electrically insulating material or are made to be insulating.

3. The method according to Claim 2 in which the fluidization of the powder paint is brought about by using a painting machine having two compartments, a compartment (B) containing the powder paint in fluidized form, and a compartment (A) situated above the compartment (B) through which the fluidizing air is passed, the two compartments (A) and (B) being separated by a diffusing membrane (C) which is permeable to air, the pressure of the fluidization air in the compartment (A) being maintained at a pressure suited to the quantity of paint which is to be fluidized, comprised between 300 gr/cm² and 1 kg/cm².

4. The method according to Claim 1, during which the level of powder in the compartment (B) is kept constant by means of a level-maintaining probe connected to the powder reservoir and to the surface of the volume of powder situated in the compartment (B).

5. The method according to any of the preceding claims, in which after the fixing of the powder paint on the substrate (1), the latter is heated so as to subject this powder to an at least partial fusion allowing a substantially uniform coating to be formed on the substrate.

6. The method according to Claim 5 in which the firing of the substrate covered with powder is subjected to a firing by infrared, UV or NIR (near infrared).

7. An installation for carrying out the method according to Claim 1 for the continuous application of a powder substance (4) on a substrate (1) which is electrically conductive or is made such, preferably in the form of a continuous band, comprising:
an enclosure (2) for depositing the paint on this substrate (1) which is passing by the lower part of this enclosure (2),
a painting machine (3) positioned above the passage line of the substrate (1) in which the powder paint is introduced, and
means to create an electrical field in this enclosure (2), allowing this powder (5) to be applied on the substrate electrostatically,
a suction cabin (5) at the lower part of the enclosure (2) allowing the excess powder paint to be aspirated,
a cyclone (6) connected to the suction cabin (5) to aspirate this excess powder and comprising at its upper part a device for the elimination of the powder towards the exterior via filters and comprising at its lower part an opening connected to the supply system of the painting machine to recycle the excess powder paint in the circuit, the painting machine comprising two compartments (A) and (B) separated by a diffusing membrane (C) permeable to air, the compartment (B) containing a volume of powder paint and the compartment (A) receiving fluidizing air under pressure to transform this volume of powder into a fluidized bed of powder in the compartment (B),
a spray nozzle (E) immersed in the powder paint passing through the compartment (B) and the fluidized bed in which it is immersed, above the permeable membrane (C) and substantially parallel to the latter, **characterized in that** this nozzle is supplied at one end with spray air at a pressure of 100 to 500 g/cm² during use, and is connected at the other end by a jet end (18), and **in that** this jet end (18) is hollow in the interior and comprises an internal wall (31) provided with an opening (32) through which the powder paint is introduced in the jet end, and opposite the wall (31), a rounded wall is situated with a radius of curvature (R) comprised between 1 mm and 15 mm, the curvature being selected as a function of the desired dispersion angle of the flat jet of powder paint.

8. The installation according to Claim 7, in which the walls of the painting machine (3) are made of electrically insulating material.

9. The installation according to Claim 7, in which the spray nozzle (E) comprises, in its part which is immersed in the paint powder, calibrated holes arranged circumferentially through which the powder paint is aspirated by Venturi effect.

10. The installation according to Claim 9, in which the spray air passing through the spray nozzle is maintained at a pressure comprised between 0.2 and 0.6 Kg/cm².

11. The installation according to Claim 7, in which pressure of air passing in the compartment (A) is maintained at a pressure suited to the quantity of paint which is to be fluidized, preferably between 300 g/cm² and 1kg/cm².

12. The installation according to Claim 7, in which the painting machine (3) comprises a probe for maintaining the level of powder in the compartment (B) connected to the powder reservoir (14) and to the surface of the volume of powder in the compartment (B).

13. The installation according to Claim 9, in which the Venturi effect aspirating the powder through the calibrated orifices is caused by the spray air passing through the nozzle and by a regulating device situated inside the nozzle at the level of the powder suction holes.

14. The installation according to Claim 13, in which this regulating device is an adjustable pulverizer (20) comprising a head, the top (21) of which has a truncated shape which extends by a cylindrical part (22) of external diameter adjusted to the internal diameter of the suction nozzle, this cylindrical part (22) being connected at its end to a tubular part (23) of smaller diameter so that the whole: truncated part, cylindrical part and tubular part, forms a piston, and comprising a central bore (24) through which the spray air passes.

15. The installation according to Claim 15, in which the adjustable jet (20) allows the flow of powder paint to be regulated passing through the calibrated orifices of the spray nozzle.

## Patentansprüche

1. Verfahren zur elektrostatischen Auftragung eines Pulverlacks (4) im Durchlaufverfahren auf einem Träger (1), vorzugsweise unter der Form eines durchlaufenden Bandes, das die folgenden Schritte umfasst:
im Wesentlichen horizontales Vorbeilaufen lassen des Trägers (1) in Richtung seiner Länge durch eine Pulverlack-Beschichtungskammer (2),
Befestigen einer Lackiermaschine (3) über der Durchgangslinie des Trägers (1) in einer vorbestimmten Entfernung davon und im Inneren der Kammer (2), wobei diese Lackiermaschine zwei Räume (A) und (B) umfasst, die durch eine luftdurchlässige Diffusionsmembran (C) getrennt sind, wobei der Raum (B) ein Pulverlackvolumen enthält und der Raum (A) fluidisierende Druckluft empfängt, um dieses Pulvervolumen im Raum (B) in eine Pulverwirbelschicht umzuwandeln,
Einführen des Pulverlacks in die Lackiermaschine (3) bis zu einem vorbestimmten Pegel, und
Erzeugen eines elektrischen Felds mittels Elektroden zwischen einer Düse zum Sprühen (E) des Pulverlacks und dem Träger,
Sprühen des Pulverlacks ausgehend von der Sprühdüse (E) auf den Träger (1), derart, dass der gesprühte Strahl gemäß einem horizontalen oder vertikalen Flachstrahl von 30 bis maximal 180° gespritzt wird, wobei die Sprühdüse (E) im Pulverlack eingetaucht ist und den Raum (B) und die Wirbelschicht, in die sie eingetaucht ist, über der durchlässigen Membran (C) und im Wesentlichen parallel dazu vollständig durchquert, wobei diese Düse an einem Ende mit Sprühluft versorgt wird und über einen Spritzdüseneinsatz (18) mit dem anderen Ende verbunden ist, wobei der Spritzdüseneinsatz (18) innen hohl ist und eine Innenwand (31) umfasst, die mit einer Öffnung (32) versehen ist, durch die der Pulverlack in den Spritzdüseneinsatz (18) eingeführt wird, wobei eine abgerundete Wand mit einem Krümmungsradius (R), dessen Abmessung zwischen 1 und 15 mm enthalten ist, sich auf der der Wand (31) entgegengesetzten Seite befindet, wobei die Krümmung in Abhängigkeit vom gewünschten Streuwinkel des Pulverlack-Flachstrahls gewählt wird,
Durchqueren lassen von Luft bei einem Druck, der zwischen 100 und 500 g/cm² enthalten ist, durch die im fluidisierten Pulverlack eingetauchte Sprühdüse (E).

2. Verfahren nach Anspruch 1, wobei eine Lackiermaschine (3) verwendet wird, deren Wände aus elektrisch isolierendem Material ausgeführt sind oder isolierend gemacht werden.

3. Verfahren nach Anspruch 2, wobei unter Verwendung einer Lackiermaschine mit zwei Räumen, einem Raum (B), der Pulverlack in fluidisierter Form enthält, und einem Raum (A), der über dem Raum (B) angeordnet ist, den man durch die fluidisierende Luft durchqueren lässt, die Fluidisierung des Pulverlacks hervorgerufen wird, wobei die zwei Räume (A) und (B) durch eine luftdurchlässige Diffusionsmembran (C) getrennt sind, wobei der Druck der Fluidisierungsluft im Raum (A) bei einem Druck gehalten wird, der an die Menge des zu fluidisierenden Lacks angepasst ist und zwischen 300 g/cm² und 1 kg/cm² enthalten ist.

4. Verfahren nach Anspruch 1, während dessen der Pegel des Pulvers im Fach (B) mittels einer Sonde zur Pegelhaltung konstant gehalten wird, die mit dem Pulverbehälter und der Oberfläche des Pulvervolumens, das sich im Raum (B) befindet, verbunden ist.

5. Verfahren nach einem der vorhergehenden Ansprüche, wobei nach der Fixierung des Pulverlacks auf dem Träger (1), dieser derart erhitzt wird, dass dieses Pulver zumindest teilweise einer Schmelze unterzogen wird, die auf dem Träger die Bildung einer im Wesentlichen gleichförmigen Beschichtung ermöglicht.

6. Verfahren nach Anspruch 5, wobei das Einbrennen des mit Pulver beschichteten Trägers einem Einbrennen durch Infrarot, UV oder NIR (nahes Infrarot) unterzogen wird.

7. Vorrichtung zur Durchführung des Verfahrens nach Anspruch 1 zur Auftragung einer pulverförmigen Substanz (4) im Durchlaufverfahren auf einem elektrisch leitenden oder leitend gemachten Träger (1), vorzugsweise unter der Form eines durchlaufenden Bandes, die Folgendes umfasst:
eine Kammer (2) zur Beschichtung des Trägers (1), der in der Lage ist, im unteren Abschnitt dieser Kammer (2) vorbeizulaufen, mit dem Lack,
eine Lackiermaschine (3), die über der Durchgangslinie des Trägers (1) positioniert ist, in die der Pulverlack eingeführt wird, und
Mittel zur Erzeugung eines elektrischen Felds in dieser Kammer (2), das das elektrostatische Auftragen dieses Pulvers (5) auf den Träger ermöglicht,
eine Absaugkabine (5) im unteren Abschnitt der Kammer (2), die das Absaugen des überschüssigen Pulverlacks ermöglicht,
einen Zyklon (6), der mit der Absaugkabine (5) verbunden ist, um dieses überschüssige Pulver abzusaugen, und der an seinem oberen Abschnitt eine Einrichtung zur Entfernung des Pulvers nach außen über Filter umfasst und an seinem unteren Abschnitt eine Öffnung umfasst, die mit einem System zur Versorgung der Lackiermaschine verbunden ist, um den überschüssigen Pulverlack im Kreis rückzugewinnen, wobei die Lackiermaschine zwei Räume (A) und (B) umfasst, die durch eine luftdurchlässige Diffusionsmembran (C) getrennt sind, wobei der Raum (B) ein Pulverlackvolumen enthält und der Raum (A) fluidisierende Druckluft empfängt, um dieses Pulvervolumen im Raum (B) in eine Pulverwirbelschicht umzuwandeln,
eine Sprühdüse (E), die in den Pulverlack eingetaucht ist und den Raum (B) und die Wirbelschicht, in die sie eingetaucht ist, über der durchlässigen Membran (C) und im Wesentlichen parallel dazu vollständig durchquert, **dadurch gekennzeichnet, dass** diese Düse während der Verwendung an einem Ende mit Sprühluft bei einem Druck von 100 bis 500g/cm² versorgt wird und über einen Spritzdüseneinsatz (18) mit dem anderen Ende verbunden ist, wobei dieser Spritzdüseneinsatz (18) innen hohl ist und eine Innenwand (31) umfasst, die mit einer Öffnung (32) versehen ist, durch die der Pulverlack in den Spritzdüseneinsatz (18) eingeführt wird, und sich auf der der Wand (31) entgegengesetzten Seite eine abgerundete Wand mit einem Krümmungsradius (R) befindet, der zwischen 1 mm und 15 mm enthalten ist, wobei die Krümmung in Abhängigkeit vom gewünschten Streuwinkel des Pulverlack-Flachstrahls gewählt wird.

8. Vorrichtung nach Anspruch 7, wobei die Wände der Lackiermaschine (3) aus elektrisch isolierendem Material bestehen.

9. Vorrichtung nach Anspruch 7, wobei die Sprühdüse E in ihrem im Pulverlack eingetauchten Abschnitt kalibrierte Löcher umfasst, die am Umfang angeordnet sind und durch die der Pulverlack durch den Venturi-Effekt abgesaugt wird.

10. Vorrichtung nach Anspruch 9, wobei die Sprühluft, die die Sprühdüse durchquert, bei einem Druck gehalten wird, der zwischen 0,2 und 0,6 kg/cm² enthalten ist.

11. Vorrichtung nach Anspruch 7, wobei der Druck der Luft, die den Raum A durchquert, bei einem Druck gehalten wird, der an die Menge des zu fluidisierenden Lacks angepasst ist, vorzugsweise zwischen 300 g/cm² und 1 kg/cm².

12. Vorrichtung nach Anspruch 7, wobei die Lackiermaschine (3) eine Sonde zur Pegelhaltung des Pulvers im Raum (B) umfasst, die mit dem Pulverbehälter 14 und der Oberfläche des Pulvervolumens im Raum (B) verbunden ist.

13. Vorrichtung nach Anspruch 9, wobei der Venturi-Effekt, der das Pulver durch die kalibrierten Öffnungen absaugt, durch die Sprühluft, die die Düse durchquert, und durch eine Regeleinrichtung verursacht wird, die sich im Inneren der Düse in Höhe der Pulverabsauglöcher befindet.

14. Vorrichtung nach Anspruch 13, wobei diese Regeleinrichtung ein regelbares Sprühgerät (20) ist, das einen Kopf umfasst, dessen Spitze (21) eine Kegelstumpfform aufweist, die sich durch einen zylindrischen Abschnitt (22) ausdehnt, dessen Außendurchmesser an den Innendurchmesser der Absaugdüse angepasst ist, wobei dieser zylindrische Abschnitt (22) an seinem Ende derart an einen rohrförmigen Abschnitt (23) von kleinerem Durchmesser angeschlossen ist, dass der Zusammenbau des kegelstumpfförmigen Abschnitts, des zylindrischen Abschnitts und des rohrförmigen Abschnitts einen Kolben bildet, und eine zentrale Bohrung (24) umfasst, die durch die Sprühluft durchquert wird.

15. Vorrichtung nach Anspruch 15, wobei die regelbare Spritzdüse (20) die Regelung der Durchflussmenge des Pulverlacks, der die kalibrierten Öffnungen der Sprühdüse durchquert, ermöglicht.
